# EUROPÄISCHE PATENTSCHRIFT

(11) **EP 0 510 362 B1**
(45) Veröffentlichungstag und Bekanntmachung des Hinweises auf die Patenterteilung: **19.04.1995**
(21) Anmeldenummer: 92104831.0
(22) Anmeldetag: 20.03.1992
(51) Int. Cl.: H02K 5/128, H02K 17/30, H02K 11/00

(54) **Elektromotor, insbesondere Spaltrohrmotor für eine Kreiselpumpe oder einen Lüfter**
Electric motor, in particular gap-sleeve motor for a centrifugal pump or a ventilator
Moteur électrique, en particulier moteur à manchon d'entrefer pour une pompe centrifuge ou un ventilateur

(30) Priorität: 23.04.1991 DE 4113198
(43) Veröffentlichungstag der Anmeldung: 28.10.1992
(73) Patentinhaber: WILO GmbH, D-44263 Dortmund (DE)
(72) Erfinder: Greitzke, Stephan F., Dr.-Ing., W-4600 Dortmund 22 (DE); Lütkenhaus, Norbert, Dipl.-Ing., W-4716 Olfen (DE); Hübner, Jürgen, Dipl.-Ing., W-4600 Dortmund 41 (DE); Kech, Hansjürgen, Dipl.-Ing., W-5804 Herdecke (DE)
(74) Vertreter: COHAUSZ HASE DAWIDOWICZ & PARTNER

(56) Entgegenhaltungen:
- EP-A- 0 374 612
- DE-A- 2 630 518
- DE-A- 3 642 727
- DE-B- 1 097 543
- DE-B- 1 146 580
- DE-B- 1 188 192
- DE-C- 3 209 554
- FR-A- 2 045 408
- US-A- 3 604 964

## Beschreibung

Die Erfindung betrifft einen Elektromotor, insbesondere Spaltrohrmotor für eine Kreiselpumpe oder einen Lüfter, mit einer Motorwelle, Wellenlagern für die Motorwelle, einem mit der Motorwelle verbundenen Rotor, einem Stator und mit einem Motorgehäuse, welches auf seiner Stirnseite eine koaxial zur Längsachse der Motorwelle ausgebildete, topfförmige Einstülpung aufweist, in deren Grundfläche eine Öffnung ausgebildet ist, wobei das auf dem der Stirnseite zugewandten Ende der Motorwelle angeordnete Wellenlager in einem Spalttopfm einsitzt, der die Öffnung des Motorgehäuses verschließend mit seiner Grundfläche über deren Bereiche der Öffnung frei hinausragt.

Solch ein beispielsweise zum Antrieb einer Umwälzpumpe in einer Heizanlage eines Wohnhauses eingesetzter Elektromotor ist aus der französischen Patentanmeldung FR-A-2 045 408 bekannt.

Bekannte Spaltmotorpumpen bestehen im wesentlichen aus zwei Baugruppen, von denen die erste Baugruppe aus dem Motorgehäuse, in das der Stator eingefügt ist, und die zweite Baugruppe aus der Motorwelle, dem auf der Motorwelle befestigten Rotor und den an den Wellenenden der Motorwelle angeordneten Wellenlagern gebildet ist. Bei Spaltrohrmotoren ist die zweite Baueinheit zusätzlich durch ein die zweite Baugruppe umgebendes Spaltrohr aus dünnwandigem Material gegenüber der ersten Baugruppe abgeschlossen.

Die bekannten Elektromotoren haben den Nachteil, daß es bei ihnen nur unter großem Aufwand möglich ist, die für die Beurteilung des Betriebszustands des Motors wesentlichen Meßgrößen, wie Motortemperatur und die Temperatur des den Motor durchströmenden Fluid im Bereich des Spaltrohres, die Temperatur und das Laufverhalten der Wellenlager sowie die Drehzahl und Drehrichtung des Motors zu erfassen. Diese Überwachung ist besonders bei solchen Spaltrohrmotoren wichtig, die als Umwälzpumpenantriebe in Heizungsanlagen unbeaufsichtigt im Dauerbetrieb laufen.

Ein Pumpenaggregat, bei dem das Erfassen des Läuferaxialspiels gegenüber herkömmlichen Pumpenaggregaten vereinfacht ist, ist aus der deutschen Offenlegungsschrift DE 31 00 863 A1 bekannt. Bei diesem Aggregat ist auf der dem Motor abgewandten Stirnseite der Pumpe ein hohler Verlängerungsschaft ausgebildet, in dessen Innenbohrung eine Verlängerung der Pumpenwelle hineinragt. An ihrer Spitze trägt diese Verlängerung ein Magnet, durch das bei Rotation der Welle Kontakte ausgelöst werden, die in einem auf den Schaft aufsteckbaren Aufsatzstück befestigt sind. Nachteilig bei dem bekannten Pumpenaggregat ist, daß bei ihm nur ein einziger Betriebsparameter, nämlich das Axialspiel der Pumpe, erfaßt werden kann. Darüberhinaus hat das Aggregat wegen seiner räumlichen Ausdehnung den zusätzlichen Nachteil, daß es nur schwer in eine Hausheizungsanlage eingebaut werden kann. Ein weiteres Problem besteht dabei in der Gefahr, einer Beschädigung der frei und ungeschützt vorstehenden Teile des Aggregates.

Die Aufgabe der Erfindung besteht darin, einen einfach zu montierenden Spaltrohrmotor zu schaffen, bei dem die Erfassung der Betriebsparameter leicht möglich ist.

Diese Aufgabe wird erfindungsgemäß dadurch gelöst, daß auf den Spalttopf eine Trägereinheit aufsteckbar ist, die Sensoren zum Erfassen von Parametern trägt, die den Betriebszustand oder den Verschleißzustand des Elektromotors und/oder des Gesamtaggregates (Kreiselpumpe, Lüfter) kennzeichnen, und daß die Trägereinheit einen Vorsprung aufweist, der in die Einstülpung des Motorgehäuses formschlüssig eingreift.

Bei einer derartigen Ausgestaltung eines Elektromotors ist es möglich, die Sensoren auf der Trägereinheit vorzumontieren und diese Trägereinheit zusammen mit den Sensoren an einer Außenseite des Elektromotorgehäuses zu befestigen. Die Wartung der Sensoren ist dabei besonders leicht, weil die Trägereinheit lösbar an der Außenseite des Elektromotorgehäuses befestigt ist. Dabei ist die Trägereinheit einfach an der Stirnseite des Motorgehäuses zu befestigen, weil die Trägereinheit einen Vorsprung aufweist, der in die Einstülpung des Motorgehäuses formschlüssig eingreift. Indem der Vorsprung der Trägereinheit ein gewisses Stück in das Innere des Elektromotors hineinragt, können die Betriebsparameter genau erfaßt werden. Dies gilt insbesondere deshalb, weil die Trägereinheit formschlüssig auf dem Spalttopf aufsitzt. Auf diese Weise können die Betriebsparameter Temperatur, Drehzahl- und Drehrichtung sicher erfaßt werden.

Der Verschleißzustand der Lagerungen des Motors und gegebenenfalls der von ihnen getriebenen Pumpen oder Lüfter kann besonders genau dann erfaßt werden, wenn die Abschlußkappe an der strinseitigen Wellenlagerung der Motorwelle anliegt. Auf diese Weise übertragen sich alle von den Lagerungen verursachten und der Motorwelle übertragenen Vibrationen auf die Trägereinheit, auf der sie von erschütterungsempfindlichen Sensoren erfaßt werden können.

Die Handhabung und die Montage der Trägereinheit läßt sich zusätzlich dadurch vereinfachen, daß die Trägereinheit einen Arm aufweist, der eine Steckerleiste trägt, über die die Sensoren an eine Auswerteinheit angeschlossen sind. Auf diese Weise ist es ohne aufwendige Reparaturarbeiten leicht möglich, die Trägereinheit zu ersetzen, wenn einer der auf ihr befestigten Sensoren defekt ist.

Die Sicherheit der Befestigung der Trägereinheit an der Stirnseite des Elektromotorgehäuses läßt sich noch dadurch verbessern, daß die Außenwände des Vorsprungs der Trägereinheit eine der Form der Abschlußkappe entsprechende Form aufweisen und an den Außenwänden der Abschlußkappe formschlüssig anliegen. Dabei ist es besonders günstig, wenn durch die Außenwände des Vorsprungs der Trägereinheit ein Drei-Punkt-Lagerung der Trägereinheit an den Außenwänden der Abschlußkappe gebildet ist. Auf diese Weise ist eine dauerhafte Halterung der Trägereinheit gewährleistet. Dabei können die Anforderungen an die Maßgenauigkeit der Abmaße der Abschlußkappe und des Vorsprunges dadurch herabgesetzt werden, daß mindestens eine der Außenwände des Vorsprungs der Trägereinheit radial verschiebbar ist.

Eine besonders sichere Klemmhalterung der Trägereinheit an dem Gehäuse des Elektromotors ergibt sich, wenn die verschiebbare Außenwand gegen eine äußere, die verschiebbare Außenwand umgebende weitere Außenwand der Trägereinheit über Federn abgestützt ist.

Die Verschiebbarkeit der Außenwand eines zylinderförmigen Vorsprungs der Trägereinheit kann leicht dadurch verwirklicht werden, daß von der ringförmigen Außenwand des Vorsprungs der Trägereinheit ein Ringsektor abgeteilt ist der radial zu der Außenseite der Abschlußkappe verschiebbar ist. Der Sitz der Trägereinheit kann dabei noch dadurch verbessert werden, daß der Ringsektor an einer seiner Längskanten einen Vorsprung aufweist, der formschlüssig in einer an der axialen Schnittfläche der feststehenden Außenwand des Vorsprungs gebildeten Kehle eingreift.

Besonders günstig aufgrund des guten Übertragungsverhaltens ist es, die Sensoren auf der der Stirnseite des Motorgehäuses zugewandten Oberfläche der Trägereinheit zu befestigen. Dabei ist es sinnvoll, die Sensoren auf den unverschiebbaren Außenwänden des Vorsprungs der Trägereinheit zu befestigen, weil dadurch die elektrische Verbindungen der Sensoren nicht belastet werden.

Eine gute Störunempfindlichkeit und lange Lebensdauer der Sensoren läßt sich dadurch erzielen, daß die Sensoren zum Schutz gegen Feuchtigkeit, Staub oder elektromagnetische Einstreuungen mittels einer Schutzschicht eingekapselt sind.

An der Trägereinheit können Sensoren zur Messung der Wicklungstemperatur des Spaltrohrmotors, der Temperatur des Fluids, der Lagertemperatur, der Drehzahl und Drehrichtung von Rotor und Laufrad, der elektrischen und hydraulischen Leistung und/oder des Verschleißzustandes des axialen und des radialen Lagers der Pumpe oder des Lüfters getragen sein.

Die formschlüssige Befestigung der Trägereinheit auf den Spalttopf ist besonders einfach dann möglich, wenn in den Boden des Vorsprungs der Trägereinheit eine Einsenkung zur Aufnahme des Kopfes einer Entlüftungsschraube eingelassen ist, die einer Gewindebohrung der Abschlußkappe eingeschraubt ist.

Stellt sich heraus, daß die formschlüssige Befestigung der Trägereinheit aufgrund von Vibrationen allein nicht ausreicht, so ist es vorteilhaft, wenn die Trägereinheit zusätzlich kraftschlüssig lösbar an der Stirnseite des Motorgehäuses befestigt ist.
Eine automatische Steuerung und Regelung der Motorleistung und eine automatische Kontrolle des Verschleißzustandes des Elektromotors läßt sich besonders leicht dadurch verwirklichen, daß die Auswerteinrichtung mit einer Motorregeleinrichtung verbunden ist und ein auf das Ausgangssignal der Sensoren bezogenes Steuersignal zur automatischen Steuerung des Elektromotors liefert.

Für die Überwachung der Temperaturentwicklung des Motors können Sensoren verwendet werden, die aufgrund von Wärmeeinfluß ihren Widerstand ändern. Für die Erfassung der Drehzahl und Drehrichtung des Elektromotors können magnetempfindliche Bauelemente, wie induktive Sensoren, Halleffekt-Sensoren oder magnetoresistive Halbleiter zum Einsatz kommen. Für die Verschleißmessung der Lagerungen Elektromotorwelle und Pumpenrotor in axialer und radialer Richtung können Beschleunigungssensoren, wie piezokeramische oder piezoresistive Elemente oder Piezofolien eingesetzt werden.

Da der Elektromotor im wesentlichen aus zwei Baugruppen, nämlich aus der aus Motorgehäuse und Stator gebildeten ersten Baugruppe und der aus Rotor , Welle und Motor gebildeten zweiten Baugrppe, die im folgenden Kartusche genannt wird, besteht, ergibt sich ein besonders einfach herzustellender Motor, wenn der Spalttopf kraftschlüssig mit dem äußeren Lagering des ihm zugeordneten Wellenlagers verbunden ist und gemeinsam mit dem rotor beim Zusammenbau des Elektromotors in das Motorgehäuse einführbar ist.

Wird die Kartusche stirnseitig durch ein am Motorgehäuse an der Berandung der stirnseitigen Öffnung anliegendes lösbares Sicherungsellemnt gehalten, so wird auf einfach Weise verhindert, daß die zweite Baugruppe, die nicht kraftschlüssig in der ersten Baugruppe, dem Motor mit Stator festsitzt, bei ungünstiger Lage des zur Reparatur vom Pumpengehäuse getrennten Motors aus diesem herausrutscht und eine Gefährdung von Menschen und/oder Sachwerten verursacht. Dabei kann das Sicherungselement ein Federring, ein Gummiring oder ein lösbares Spannelement sein. In diesem Fall klemmt das Sicherungselemnt mit einer definierten Haltekraft auf der Kartusche, so daß diese formschlüssig im Motorgehäuse gehalten wird.

Im folgenden wird die Erfindung anhand einer ein Ausführungsbeispiel zeigenden Zeichnung näher erläutert.

Es zeigen:

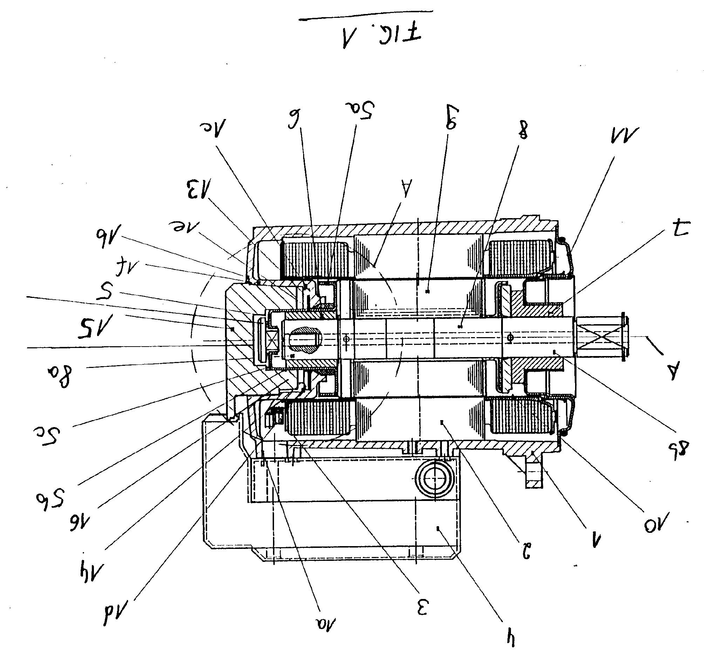

- Fig. 1: den erfindungsgemäßen Spaltrohrmotor im Längsschnitt,

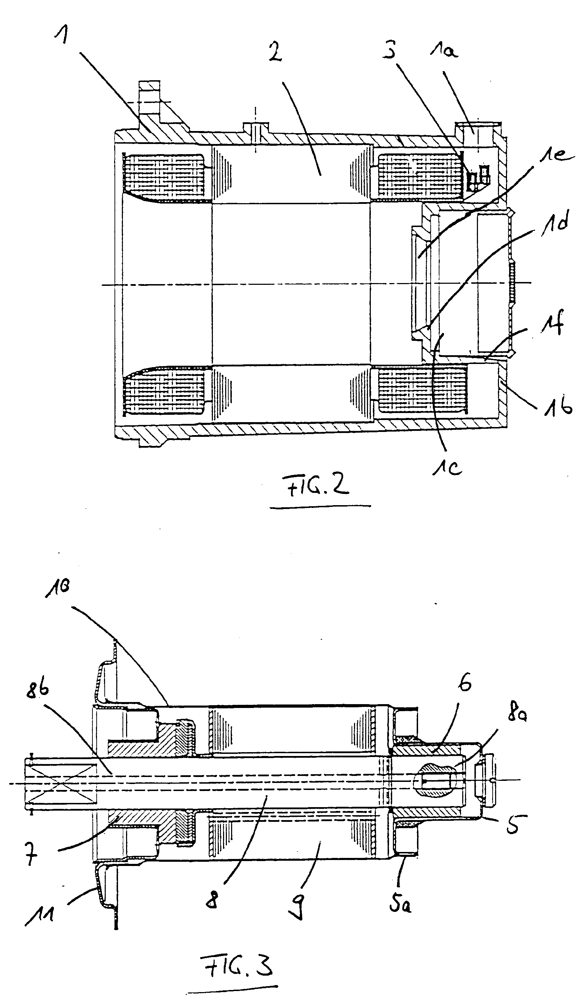

- Fig.2: eine erste Baugruppe des Spaltrohrmotors nach Fig. 1 im Längsschnitt,

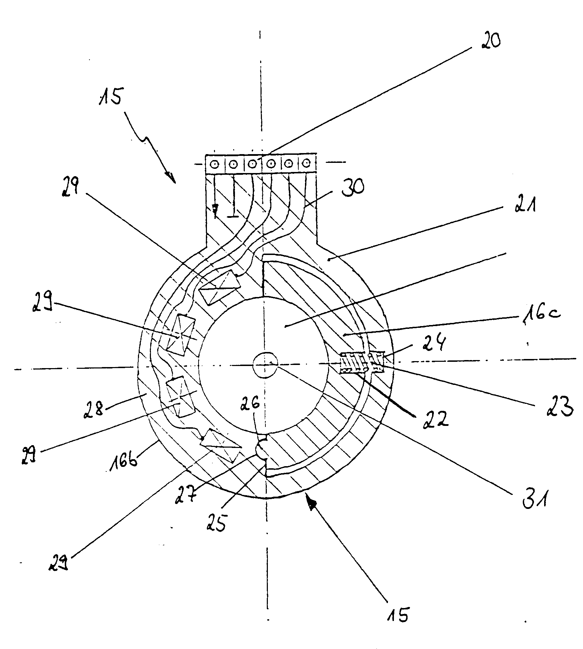

- Fig.3: eine zweite Baugruppe des Spaltrohrmotors nach Fig. 1 im Längsschnitt,

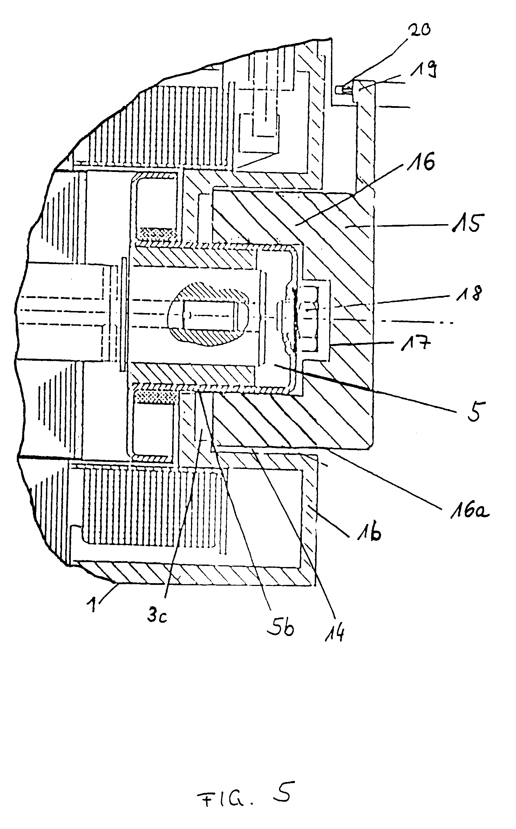

- Fig. 4: einen radialen Schnitt durch eine auf den Spaltrohrmotor nach Fig.1 aufgesetzten Trägereinheit,
- Fig. 5: einen vergrößerten Ausschnitt A der Fig.1, die Trägereinheit im Längsschnitt zeigend,

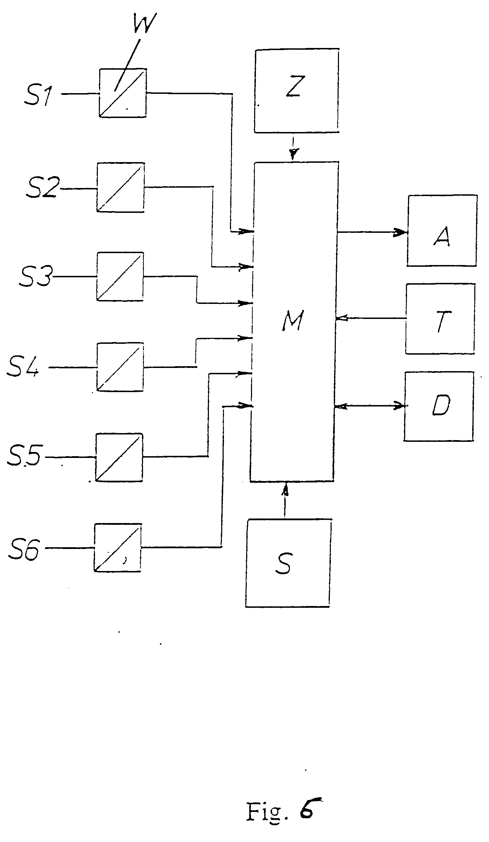

- Fig. 6: ein Strukturschaltbild einer Auswerteeinheit, die die Sensorsignale weiter verarbeitet.

Die erste Baugruppe des Spaltrohrmotors ist durch das Motorgehäuse 1 gebildet, in dem ein Stator 2 befestigt ist. Zusätzlich weist das Motorgehäuse an seiner Oberseite eine Öffnung 1a für eine Steckleiste 3 auf, mit der der Stator 2 auf einem auf der Motoroberseite aufgesetzten Steuermodul 4 verbunden ist. Auf der Stirnseite 1b des Motorgehäuses 1 ist eine Einstülpung 1c ausgebildet, in deren Grundfläche 1d ein konzentrisch zur Motorachse A angeordnete Öffnung le ausgeformt ist.

Ein Spalttopf 5, Wellenlager 6,7, eine Motorwelle 8, ein mit der Motorwelle 8 drehfest verbundener Rotor 9 und ein Spaltrohr 10 sowie ein Gehäusedeckel 11 bilden die zweite Baugruppe des Elektromotors. In dem Spalttopf 5 sitzt das Wellenlager 6 ein, dessen äußerer Lagerring kraftschlüssig mit dem Spalttopf 5 verbunden ist. Das Wellenlager 6 ist auf dem stirnseitigen Ende 8a der Motorwelle 8 angeordnet. Das abtriebseitige Ende 8b der Motorwelle 8 ist in dem zweiten Wellenlager 7 gelagert, dessen Außenring in dem Gehäusedeckel 11 gehalten ist.

Die Wellenlager 6,7, die Motorwelle 8 und der Rotor 9 sind von einem Spaltrohr 12 eingekapselt, das sich vom Gehäusedeckel 1 vom Spalttopf 5 erstreckt und mit einem umlaufenden Wulst 5a am Fuß des Spalttopfes 5 verbunden ist.
Das Spaltrohr 12, der Gehäusedeckel 11 und der Spalttopf 5 sind zu einer Kartusche zusammengeschweißt. Alternativ können diese Teile auch in einem Tiefziehverfahren in einem Stück hergestellt werden.

Die zweite Baugruppe wird nach ihrer Vormontage in die erste Baugruppe aus Motorgehäuse 1 und Stator 2 eingeführt, bis der Spalttopf 5 in der Öffnung le auf der Stirnseite 1b des Motorgehäuses 1 einsitzt.

Anschließend wird ein elastischer Sicherungsring 13 auf den Spalttopf 5 geschoben, durch den die zweite Baugruppe formschlüssig in der ersten gehalten ist. Der Spalttopf 5 sitzt dabei mit Spiel in der Öffnung 1e und ragt mit seinen Seitenwänden 5b und seiner Grundfläche 5c über die Randbereiche der Öffnung le hinaus. Auf diese Weise ist zwischen seinen Seitenwänden 5b und den Wänden 1f der Einstülpung 1c ein ringnutförmiger Spalt 14 gebildet. In den Spalt 14 greifen die Wände einer topfförmigen Trägereinheit 15, die auf den Spalttopf 5 nach dem Zusammenbau der beiden Baugruppen des Spaltrohrmotors aufgesetzt wird.
Zum Auswechseln einer der Baugruppen wird nach dem Abnehmen der Trägereinheit die zweite Baugruppe aus der ersten Baugruppe gegen die Kraft des elastischen Sicherungsrings 13 mit Hilfe eines geeigneten Werkzeugs herausgeschoben. Auf diese Weise ist sichergestellt, daß die zweite Baugruppe nicht unbeabsichtigt aus der ersten Baugruppe herausfällt, nach dem der Spaltrohrmotor zur Reparatur beispielsweise von dem Pumpengehäuse abgebaut worden ist.

Die Trägereinheit 15 ist auf dem Spalttopf 5 an der Stirnseite 1b des Spaltrohrmotors formschlüssig befestigt. Sie weist einen zylindrischen Vorsprung 16 mit ringförmigen Außenwänden 16a auf, die in den Spalt 14 hineinragen. Die Außenwände 16a des Vorsprungs 16 liegen formschlüssig an den Seitenwänden 5b des Spalttopfes 5 an. Koaxial zu der Motorachse ist eine Einsenkung 17 in den Boden der Trägereinheit 15 eingelassen,in die eine in eine Gewindebohrung des Spalttopfes 5 eingeschraubte Entlüftungsschraube 18 hineinragt. An der Trägereinheit 15 befestigt ist zudem ein Arm 19, der eine Steckerleiste 20 trägt.

Die ringförmige Außenwand 16a des Vorsprungs 16 der Trägereinheit 15 ist in einem halbkreisförmigen feststehenden Bereich 16b und einen radial verschiebbaren, halbkreisförmigen Ringsektor 16c unterteilt. Der Ringsektor 16c ist von einer weiteren Außenwand 21 umgeben, die einstückig mit dem feststehenden Bereich 16b der Außenwand 16a ausgebildet ist. Er weist in seinem Scheitel eine Bohrung 22 auf, in der eine Feder 23 einsitzt. Mit ihrem anderen Ende sitzt die Feder 23 in einer Nut 24 ein, die gegenüberliegend zu dem Scheitel des Ringsektors 16c an der Innenwand der weiteren Außenwand 21 ausgebildet ist. Der Ringsektor 16c weist an seiner unteren axialen Schnittfläche 25 einen Vorsprung 26 auf, der formschlüssig in eine Kehle 27 eingreift, die in der unteren axialen Schnittfläche des feststehenden Bereichs 16b der Außenwand 16 eingelassen ist.

Auf der der Stirnseite 1b des Motorgehäuses 1 zugeordneten Oberfläche 28 der Trägereinheit 15 sind Sensoren 29 befestigt. Diese Sensoren 29 sind über Leitungen 30 an die Steckleiste 20 angeschlossen. Die Trägereinheit 15 weist koaxial zu der Motorachse des Elektromotors eine Bohrung 31 auf, durch die eine Schraube zum Befestigen der Trägereinheit 15 an dem Motorgehäuse 1 schraubbar ist.

Über die Steckleiste 20 ist die Trägereinheit 15 mit einer Auswertschaltung verbunden, die in dem Steuermodul 4 untergebracht ist.

Die Auswertschaltung weist A-D-Wandler W, eine Mikroprozessoreinheit M, einen Zeitgeber Z, eine Stromversorgung S, ein Anzeigedisplay A, eine Bedientastatur T und eine digitale Schnittstelle D zum Anbinden der Auswerteinrichtung an eine Regeleinrichtung auf.

Die Sensorsignale S1 bis S6 werden in den A/D-Wandler W in digitale Daten umgewandelt und der Mikroprozessoreinheit zugeführt. Die Mikroprozessoreinheit M zeigt die Werte de Sensorsignale in der Anzeigeneinheit A an und gibt sie über die digitale Schnittstelle D an die Regeleinheit weiter. Über den Zeitgeber Z stellt die Mikroprozessoreinheit M die Betriebsstundendauer des Motors fest. Vorgaben für die Auswertung der Sensorsignale werden über die Bedientastatur T eingegeben.

## Patentansprüche

1. Elektromotor, insbesondere Spaltrohrmotor für eine Kreiselpumpe oder einen Lüfter, mit einer Motorwelle (8), Wellenlagern (6,7) für die Motorwelle (8), einem mit der Motorwelle (8) verbundenen Rotor (9), einem Stator (2) und mit einem Motorgehäuse (1), welches auf seiner Stirnseite (1b) eine koaxial zur Längsachse der Motorwelle (8) ausgebildete, topfförmige Einstülpung (1c) aufweist, in deren Grundfläche (1d) eine Öffnung (1e) ausgebildet ist, wobei das auf dem der Stirnseite (1b) zugewandten Ende (8a) der Motorwelle (8) angeordnete Wellenlager (6) in einem Spalttopf (5) einsitzt, der die Öffnung (1e) des Motorgehäuses (1) verschließend mit seiner Grundfläche (5c) über die Randbereiche der Öffnung (1e) frei hinausragt, **dadurch gekennzeichnet**,
- daß auf den Spalttopf (5) eine Trägereinheit (15) aufsteckbar ist, die Sensoren (29) zum Erfassen von Parametern trägt, die den Betriebszustand oder den Verschleißzustand des Elektromotors und/oder des Gesamtaggregates (Kreiselpumpe, Lüfter) kennzeichnen, und
- daß die Trägereinheit (15) einen Vorsprung (16) aufweist, der in die Einstülpung (1c) des Motorgehäuses (1) formschlüssig eingreift.

2. Elektromotor nach Anspruch 1, **dadurch** **gekennzeichnet**, daß die Trägereinheit (15) einen Arm (19) aufweist, der eine Steckerleiste (20) trägt, über die die Sensoren (29) an eine Auswerteinheit (4) angeschlossen sind.

3. Elektromotor nach einem der Ansprüche 1 oder 2, **dadurch gekennzeichnet**, daß die Außenwände des Vorsprungs (16) der Trägereinheit eine der Form des Spalttopfes (5) entsprechende Form aufweisen und an dessen Außenwänden (5b) formschlüssig anliegen.

4. Elektromotor nach einem der Ansprüche 1 - 3, **dadurch gekennzeichnet**, daß durch die Außenwand (16a) des Vorsprungs (16) der Trägereinheit (15) eine Drei-Punkt-Lagerung der Trägereinheit (15) an den Außenwänden (5b) des Spalttopfes (5) gebildet ist.

5. Elektromotor nach einem der Ansprüche 3 oder 4, **dadurch gekennzeichnet** , daß mindestens eine der Außenwände (16a) des Vorsprungs (16) der Trägereinheit (15) radial verschiebbar ist.

6. Elektromotor nach Anspruch 5, **dadurch** **gekennzeichnet**, daß die verschiebbare Außenwand (16c) gegen eine äußere, die verschiebbare Außenwand (16c) umgebende weitere Außenwand (21) der Trägereinheit (15) über mindestens eine Feder (23) abgestützt ist.

7. Elektromotor nach einem der Ansprüche 1 - 6, **dadurch gekennzeichnet**, daß von der ringförmigen Außenwand (16a) des Vorsprungs (16) der Trägereinheit (15) ein Ringsektor (16c) abgeteilt ist, der radial zu der Außenseite (5b) des Spalttopfes (5) verschiebbar ist.

8. Elektromotor nach Anspruch 7, **dadurch** **gekennzeichnet**, daß der Ringsektor (16c) an einer seiner Längskanten (25) einen Vorsprung (26) aufweist, der formschlüssig in einer an der axialen Schnittfläche der feststehenden Außenwand (15b) des Vorsprungs (16) ausgebildete Kehle (27) eingreift.

9. Elektromotor nach einem der vorhergehenden Ansprüche, **dadurch gekennzeichnet**, daß die Sensoren (29) auf der der Stirnseite (1b) des Motorgehäuses (1) zugewandten Oberfläche der Trägereinheit (15) befestig sind.

10. Elektromotor nach einem der vorhergehenden Ansprüche, **dadurch gekennzeichnet**, daß die Sensoren (29) auf den unverschiebbaren Außenwänden (16b) des Vorsprungs (16) der Trägereinheit (15) befestigt sind.

11. Elektromotor nach einem der vorhergehenden Ansprüche, **dadurch gekennzeichnet**, daß die Sensoren (29) zum Schutz gegen Feuchtigkeit, Staub oder elektromagnetische Einstreuung mittels einer Schutzschicht eingekapselt sind.

12. Elektromotor nach einem der vorhergehenden Ansprüche, **dadurch gekennzeichnet**, daß die Trägereinheit (15) Sensoren (29) zur Messung der Wicklungstemperatur des Elektromotors, der Temperatur des Fluids, der Lagertemperatur, der Drehzahl und Drehrichtung von Rotor und Laufrad, der elektrischen und hydraulischen Leistung und/oder des Verschleißzustandes des axialen und des radialen Lagers der Pumpe oder des Lüfters trägt.

13. Elektromotor nach einem der vorhergehenden Ansprüche, **dadurch gekennzeichnet**, daß in den Boden des Vorsprungs (16) der Trägereinheit (15) eine Einsenkung (17) zur Aufnahme des Kopfes einer Entlüftungsschraube (18) eingelassen ist, die in einer Gewindebohrung des Spalttopfes (5) eingeschraubt ist.

14. Elektromotor nach einem der vorhergehenden Ansprüche, **dadurch gekennzeichnet**, daß die Trägereinheit (15) kraftschlüssig lösbar an der Stirnseite (1b) des Motorgehäuses (1) befestigt ist.

15. Elektromotor nach einem der vorhergehenden Ansprüche, **dadurch gekennzeichnet**, daß die Auswerteinrichtung mit einer Motorregeleinrichtung verbunden ist und ein auf das Ausgangssignal der Sensoren bezogenes Steuersignal zur automatischen Steuerung des Elektromotor liefert.

16. Elektromotor nach einem der vorhergehenden Ansprüche **gekennzeichnet**, daß der Spalttopf (5) kraftschlüssig mit dem äußeren Lagerring des ihm zugeordneten Wellenlagers (10) verbunden ist und gemeinsam mit dem Rotor (9) in das Motorgehäuse (1) einführbar ist.

17. Elektromotor nach einem der vorhergehenden Ansprüche, **dadurch gekennzeichnet**, daß der Spalttopf (5) mit Hilfe eines entriegelbaren Sicherungselementes (13) lösbar in der Öffnung (1e) der Stirnseite (1b) des Motorgehäuses (1) gehalten ist.

18. Elektromotor nach Anspruch 16, **dadurch gekennzeichnet**, daß das Sicherungselement (13) ein Federring, ein Gummiring oder ein Spannring ist.

## Claims

1. An electric motor, more particularly a canned motor for a centrifugal pump or a fan, having: a motor shaft (8); shaft bearings (6, 7) for the motor shaft (8); a rotor (9) connected to the motor shaft (8); a stator (2); and a motor casing (1) whose end face (1b) has a pot-shaped turned-in portion (1c) which is coaxial with the longitudinal axis of the motor shaft (8) and whose base surface (1d) is formed with an opening (1e), the shaft bearing (6) disposed on the end (8a) of the motor shaft (8) adjacent said end face (1b) being disposed in a can (5) which freely extends beyond the marginal zones of the opening (1e) to close by its base surface (5c) said opening (1e) of the motor casing (1), characterized in that
- fittable on to the can (5) is a support unit (15) which bears sensors (29) for determining parameters characteristic of the operational state or the state of wear of the electric motor and/or the total unit (centrifugal pump, fan), and
- the support unit (15) has a projection (16) which engages positively in the turned-in portion (lc) of the motor casing (1).

2. An electric motor according to claim 1, characterized in that the support unit (15) has an arm (19) bearing a multipoint connector (20) via which the sensors (29) are connected to an evaluation unit (4).

3. An electric motor according to one of claims 1 or 2, characterized in that the outer walls of the projection (16) of the support unit have a shape corresponding to the shape of the can (5) and bear positively against its outer walls (5b).

4. An electric motor according to one of claims 1 to 3, characterized in that a three-point bearing of the support unit (15) against the outer walls (5b) of the can (5) is formed by the outer wall (16a) of the projection (16) of the support unit (15).

5. An electric motor according to one of claims 3 or 4, characterized in that at least one of the outer walls (16a) of the projection (16) of the support unit (15) is radially displaceable.

6. An electric motor according to claim 5, characterized in that the displaceable outer wall (16c) bears via at least one spring (23) against an outer, further outer wall (21) of the support unit (15) engaging around the displaceable outer wall (16c).

7. An electric motor according to one of claims 1 to 6, characterized in that divided off from the annular outer wall (16a) of the projection (16) of the support unit (15) is an annular sector (16c) which can be displaced radially of the outer side (5b) of the can (5).

8. An electric motor according to claim 7, characterized in that one of the longitudinal edges (25) of the annular sector (16c) has a projection (26) which engages positively in a groove (27) with which the axial cut face of the fixed outer wall (15b) of the projection (16).

9. An electric motor according to one of the preceding claims, characterized in that the sensors (29) are attached to the surface of the support unit (15) adjacent the end face (1b) of the motor casing (1).

10. An electric motor according to one of the preceding claims, characterized in that the sensors (29) are attached to the non-displaceable outer walls (16b) of the projection (16) of the support unit (15).

11. An electric motor according to one of the preceding claims, characterized in that the sensors (29) are encapsulated by means of a protective layer to give protection against moisture, dust or electromagnetic pick-up.

12. An electric motor according to one of the preceding claims, characterized in that the support unit (15) bears sensors (29) for measuring the winding temperature of the electric motor, the temperature of the fluid and the bearings, the speed and direction of rotation of the rotor and impeller, the electric and hydraulic output and/or the state of wear of the axial and radial bearing of the pump or fan.

13. An electric motor according to one of the preceding claims, characterized in that the bottom of the projection (16) of the support unit (15) is formed with a depression (17) for receiving the head of a venting screw (18) which is screwed into a threaded bore of the can (5).

14. An electric motor according to one of the preceding claims, characterized in that the support unit (15) is attached non-positively and releasably to the end face (1b) of the motor casing (1).

15. An electric motor according to one of the preceding claims, characterized in that the evaluating unit is connected to a motor controlling system and for the automatic control of the electric motor delivers a control system referred to the output signal of the sensors.

16. An electric motor according to one of the preceding claims, characterized in that the can (5) is non-positively connected to the outer bearing ring of the shaft bearing (10) associated therewith and can be introduced into the motor casing (1) jointly with the rotor (9).

17. An electric motor according to one of the preceding claims, characterized in that the can (5) is releasably retained in the opening (1e) of the end face (1b) of the motor casing (1) by means of an unlockable securing element (13).

18. An electric motor according to claim 16, characterized in that the securing element (13) is a spring washer, a rubber gasket or a clamping ring.

## Revendications

1. Moteur électrique, en particulier moteur à gaine, pour une pompe centrifuge ou un ventilateur, avec un arbre de moteur (8), des paliers d'arbre (6,7) pour l'arbre de moteur (8), un rotor (9) relié à l'arbre de moteur (8), un stator (2) et avec un carter de moteur (1) qui présente sur sa face frontale (1b) une empreinte (1c) en forme de pot réalisée coaxiale à l'axe longitudinal de l'arbre de moteur (8), dans la surface de fond (1d) de laquelle est formée une ouverture (1e), le palier d'arbre (6) disposé sur l'extrémité (8a) de l'arbre de moteur (8) tournée vers la face frontale (1b) étant logé dans un pot fendu (5) qui fait saillie librement vers l'extérieur par sa surface de base (5c), en fermant l'ouverture (1e) du carter de moteur (1), au-dessus des zones de bord de l'ouverture (1e),
caractérisé en ce
- qu'une unité de support (15) peut être enfoncée sur le pot fendu (5) et porte des capteurs (29) pour détecter des paramètres qui caractérisent l'état de fonctionnement ou l'état d'usure du moteur électrique et/ou de l'ensemble du groupe (pompe centrifuge, ventilateur) et
- que l'unité de support (15) présente une saillie (16) qui vient en prise à fermeture géométrique dans l'empreinte (1c) du carter de moteur (1).

2. Moteur électrique selon la revendication 1,
caractérisé en ce que l'unité de support (15) présente un bras (19) qui porte une barre à connecteurs mâles (20) par lesquels les capteurs (29) sont raccordés à une unité d'analyse (4).

3. Moteur électrique selon l'une des revendications 1 ou 2,
caractérisé en ce que les parois extérieures de la saillie (16) de l'unité de support présentent une forme correspondant à la forme du pot fendu (5) et sont en appui à fermeture géométrique sur ses parois extérieures (5b).

4. Moteur électrique selon l'une des revendications 1-3,
caractérisé en ce qu'un logement à trois points de l'unité de support (15) sur les parois extérieures (5c) du pot fendu (5) est formé par la paroi extérieure (16a) de la saillie (16) de l'unité de support (15).

5. Moteur électrique selon l'une des revendications 3 ou 4,
caractérisé en ce qu'au moins une des parois extérieures (16a) de la saillie (16) de l'unité de support (15) est coulissante radialement.

6. Moteur électrique selon la revendication 5,
caractérisé en ce que la paroi extérieure coulissante (16c) est appuyée par au moins un ressort (23) contre une autre paroi extérieure (21) externe de l'unité de support (15) entourant la paroi extérieure coulissante (16c).

7. Moteur électrique selon l'une des revendications 1-6,
caractérisé en ce qu'un secteur circulaire (16c), qui est coulissant radialement vers le côté extérieur (5b) du pot fendu (5), est divisé de la paroi extérieure annulaire (16a) de la saillie (16).

8. Moteur électrique selon la revendication 7,
caractérisé en ce que le secteur circulaire (16c) présente sur l'une de ses arêtes longitudinales (25) une saillie (26) qui vient en prise à fermeture géométrique dans une gorge (27) formée à la surface de coupe axiale de la paroi extérieure fixe (16b) de la saillie (16).

9. Moteur électrique selon l'une des revendications précédentes,
caractérisé en ce que les capteurs (29) sont fixés sur la surface de l'unité de support (15) tournée vers la face frontale (1b) du carter de moteur (1).

10. Moteur électrique selon l'une des revendications précédentes,
caractérisé en ce que les capteurs (29) sont fixés sur les parois extérieures non coulissantes (16b) de la saillie (16) de l'unité de support (15).

11. Moteur électrique selon l'une des revendications précédentes,
caractérisé en ce que les capteurs (29) sont encapsulés au moyen d'une couche de protection pour la protection contre l'humidité, la poussière ou une perturbation électromagnétique.

12. Moteur électrique selon l'une des revendications précédentes,
caractérisé en ce que l'unité de support (15) porte des capteurs (29) pour la mesure de la température des bobines du moteur, de la température du fluide, de la température des paliers, de la vitesse de rotation et du sens de rotation du rotor et de la couronne mobile, de la puissance électrique et hydraulique et/ou de l'état d'usure des paliers axial et radial de la pompe ou du ventilateur.

13. Moteur électrique selon l'une des revendications précédentes,
caractérisé en ce qu'une creusure (17) pour recevoir la tête d'une vis d'aération (18) qui est vissée dans un alésage taraudé du pot fendu (5) est ménagée dans le fond de la saillie (16) de l'unité de support (15).

14. Moteur électrique selon l'une des revendications précédentes,
caractérisé en ce que l'unité de support (15) est fixée démontable à adhérence sur la face frontale (1b) du carter de moteur (1).

15. Moteur électrique selon l'une des revendications précédentes,
caractérisé en ce que le dispositif d'analyse est reliée à un dispositif d'asservissement du moteur et délivre un signal de commande rapporté au signal de sortie des capteurs pour la commande automatique du moteur électrique.

16. Moteur électrique selon l'une de revendications précédentes,
caractérisé en ce que le pot fendu (5) est relié à adhérence à la bague de palier extérieure du palier d'arbre (10) qui lui est adjoint et peut être introduit en même temps que le rotor (9) dans le carter de moteur (1).

17. Moteur électrique selon l'une des revendications précédentes,
caractérisé en ce que le pot fendu (5) est maintenu démontable à l'aide d'un élément de fixation (13) déverrouillable, dans l'ouverture (1e) de la face frontale (1b) du carter de moteur (1).

18. Moteur électrique selon la revendication 17, caractérisé en ce que l'élément de fixation (13) est une rondelle élastique, une bague en caoutchouc ou un collier tendeur.
